(19) Europäisches Patentamt
European Patent Office
Office européen des brevets

(11) Veröffentlichungsnummer: **0 344 825 A1**

(12) # EUROPÄISCHE PATENTANMELDUNG

(21) Anmeldenummer: **89114861.1**

(22) Anmeldetag: **02.10.86**

(51) Int. Cl.[4]: **A01N 57/20 , //(A01N57/20, 43:50)**

(30) Priorität: **10.10.85 DE 3536126**
**02.05.86 DE 3614787**

(43) Veröffentlichungstag der Anmeldung:
**06.12.89 Patentblatt 89/49**

(60) Veröffentlichungsnummer der früheren Anmeldung nach Art. 76 EPÜ: **0 223 029**

(84) Benannte Vertragsstaaten:
**AT BE DE FR GB GR IT NL**

(71) Anmelder: **HOECHST AKTIENGESELLSCHAFT**
**Postfach 80 03 20**
**D-6230 Frankfurt am Main 80(DE)**

(72) Erfinder: **Bauer, Klaus, Dr.**
**Kolpingstrasse 7**
**D-6054 Rodgau(DE)**
Erfinder: **Bieringer, Hermann, Dr.**
**Eichenweg 26**
**D-6239 Eppstein/Taunus(DE)**
Erfinder: **Mildenberger, Hilmar, Dr.**
**Fasanenstrasse 24**
**D-6233 Kelkheim/Taunus(DE)**
Erfinder: **Willms, Lothar, Dr.**
**Grüner Weg 4**
**D-5463 Unkel(DE)**

(54) **Herbizide Mittel.**

(57) Herbizide Mittel, die einen Wirkstoff der Formel I

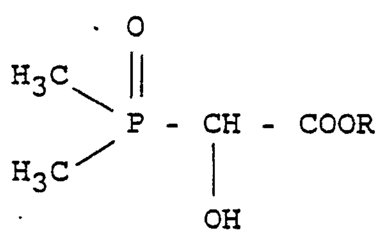

(I),

worin R = H oder (subst.) Alkyl bedeutet, oder dessen Salz in Kombination mit einer Verbindung der II bzw. II′

EP 0 344 825 A1

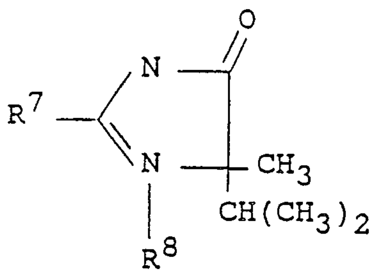 (II) 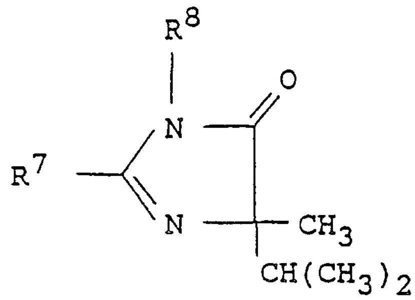 (II'),

worin $R^7$ = (subst.) Phenyl, (subst.) Chinolinyl oder (subst.) Pyridyl und $R^8$ = H, -CONH(alkyl), -CO(alkyl) oder -O-CO(alkyl) oder deren Salz enthalten, zeigen überadditive herbizide Wirkungen und eignen sich vorteilhaft zur Bekämpfung von annuellen und perennierenden Schadpflanzen.

# Herbizide Mittel

Gegenstand der vorliegenden Erfindung sind herbizide Mittel, dadurch gekennzeichnet, daß sie einen Wirkstoff der Formel I oder dessen Salz

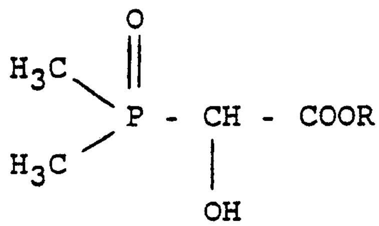

(I),

worin

R Wasserstoff oder Alkyl, das gegebenenfalls ein- oder mehrfach durch Halogen, Hydroxy, ($C_1$-$C_4$)-Alkoxy oder ($C_1$-$C_4$)-Alkoxy-carbonyl substituiert ist, bedeutet, in Kombination mit einer Verbindung der Formel II oder II′ oder deren Salz

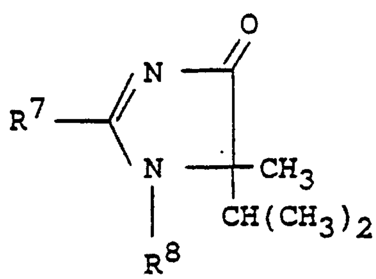

(II)

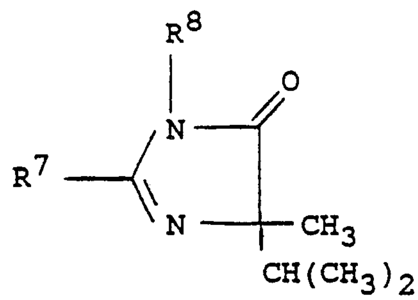

(II′),

worin jeweils

$R^7$ Phenyl, Pyridyl, Chinolinyl, die alle gegebenenfalls ein- oder mehrfach durch ($C_1$-$C_4$)-Alkyl oder ($C_1$-$C_4$)-Alkoxy, die beide ein- oder mehrfach durch Halogen substituiert sein können, einen Rest der Formeln $-COOR^9$, $-COO-CH_2-R^9-COOR^9$, $-CH_2R^9-COO(C_1-C_4\text{-alkyl})$, oder $CH_2R^9-COOCH_2R^9-COOR^9$, worin jeweils unabhängig voneinander $R^9$ Wasserstoff oder ($C_1$-$C_4$)Alkyl bedeutet, oder einen Rest der Formel $-CH_2-S(O)_n-(C_1-C_4\text{-alkyl})$ mit n = 0, 1 oder 2 substituiert sind, und

$R^8$ H, einen Rest der Formeln $-CONH(C_1-C_4\text{-alkyl})$, $-OCO(C_1-C_4\text{-alkyl})$, $-CO(C_1-C_4\text{-alkyl})$ bedeuten, wobei die Verbindungen mit $R^7$ = 3-Carboxy-2-pyridyl und $R^8$ = H ausgeschlossen sind, enthalten.

Im Falle $R^8$ = H liegen die beiden Formeln II und II′ im Tautomerengleichgewicht vor. In Abhängigkeit der Reste $R^8$ und der übrigen Substituenten kann daher die eine oder andere Form (II oder II′) vorliegen, s. DE-OS 3 121 636 und DE-OS 2 833 274.

Die Verbindungen der Formel I sind in DE-OS 3 238 958 beschrieben. Bevorzugt unter den Verbindungen der Formel I sind die Wirkstoffe, für die R = H oder ($C_1$-$C_4$)Alkyl bedeutet, sowie deren Salze, insbesondere der Wirkstoff mit R = H (Ia) oder dessen Salz, vorzugsweise das Na- (Ib) oder K-Salz(Ic).

Bevorzugt unter den Verbindungen der Formel II bzw. II′ seien solche Verbindungen genannt, worin

$R^7$ Pyridyl, das durch ($C_1$-$C_4$) Alkyl, einen Rest der Formel $-COOR^9$, $-COOCH_2R^9-COOR^9$, $-CH_2R^9-COO-(C_1-C_4\text{-alkyl})$, $-CH_2(R^9)-COOCH_2R^9-COOR^9$ oder $-CH_2-S(O)_n-(C_1-C_4\text{-alkyl})$ substituiert sein kann, bedeutet und

$R^8$ die obengenannte Bedeutung besitzt (s. Japanische Offenlegungsschrift 59/225 180, EP-A 133 311, EP-A 41 624).

Von diesen Verbindungen II bzw. II′ seien beispielsweise die nachstehend definierten Verbindungen IIa bis IId genannt:

IIa: $R^7$ = 3-Methoxycarbonyl-2-pyridyl und

$R^8$ = Methylaminocarbonyl

IIb: $R^7$ = 3-Methoxycarbonyl-2-pyridyl und
$R^8$ = Ethylaminocarbonyl
IIc: $R^7$ = 3-Methoxycarbonyl-2-pyridyl
$R^8$ = Methoxycarbonyl
IId: $R^7$ = 3-Methoxycarbonyl-methoxycarbonyl-2-pyridyl
$R^8$ = Methoxycarbonyl.

Unter den Verbindungen der Formeln II bzw. II′ ist ferner die nachstehend definierte Verbindung IIe von besonderer Bedeutung:
IIe: $R^7$ = 2-Methoxycarbonyl-5-methyl-phenyl und $R^8$ = H.

Die erfindungsgemäßen Kombinationen erfassen auch die für die Landwirtschaft einsetzbaren Salze der Verbindungen der Formeln I und II bzw II′.

Als solche kommen beispielsweise die üblichen Alkyl-, Erdalkali-, Ammonium-, substituierten Ammonium-, Phosphonium- oder Sulfoniumsalze in Betracht. Unter den Erdalkalisalzen kommen in erster Linie die Na-, K-, Mg-oder Ca-Salze in Betracht.

Ferner umfaßt Formel I und Formel II bzw. II′ auch alle entsprechenden Stereoisomeren und deren Gemische, so daß diese ebenfalls unter die erfindungsgemäßen Kombinationen fallen.

Gegenstand der vorliegenden Erfindung sind auch Dreierkombinationen von Verbindungen der allgemeinen Formel I mit zwei verschiedenen Wirkstoffen der allgemeinen Formeln II bzw. II′.
Die beschriebenen Wirkstoffkombinationen zeigen überraschend hohe Wirksamkeiten, die größer sind als aufgrund der Wirkungen der Einzelkomponenten zu erwarten war.

Die erfindungsgemäßen Wirkstoffkombinationen erfassen ein breites Unkrautspektrum. Sie eignen sich beispielsweise zur Bekämpfung von annuellen und perennierenden Unkräutern wie beispielsweise Agropyron, Paspalum, Cynodon, Imperata, Pennisetum, Convolvulus, Cirsium, Rumex, Alopecurus, Lolium, Echinochloa und andere.

Die erfindungsgemäßen Kombinationen lassen sich zur selektiven Bekämpfung von Schadpflanzen in Plantagenkulturen wie Ölpalme, Kokospalme, Gummibaum, Zitrus, Ananas, Baumwolle, Kaffee, Kakao u.a. sowie im Obst- und Weinbau einsetzen. Ebenso können die erfindungsgemäßen Kombinationen im Ackerbau im sogenannten "no till" bzw. "zero till" Verfahren eingesetzt werden. Sie können aber auch nichtselektiv auf Wegen, Plätzen, Industrieanlagen etc. angewendet werden, um diese Flächen von unerwünschtem Pflanzenwuchs freizuhalten.

Die Mischungsverhältnisse der Verbindungen der Formel I zu den Verbindungen der Formel II bzw. II′ können innerhalb weiter Grenzen, insbesondere zwischen etwa 1000:1 bis 1:10 schwanken. Die Wahl des Mischungsverhältnisses ist abhängig von verschiedenen Parametern wie der Art der Mischungspartner, Entwicklungsstadium der Unkräuter und Unkrautspektrum. Vorzugsweise werden Mischungsverhältnisse von 1:5 bis 250:1 gewählt.

Die erfindungsgemäßen Kombinationen können sowohl in Form von Mischformulierungen - benetzbare Pulver, Emulsionskonzentrate - vorliegen, die dann in üblicher Weise mit Wasser verdünnt zur Anwendung gebracht werden; sie können aber auch als sogenannte Tankmischungen durch gemeinsame Verdünnung der getrennt formulierten Komponenten mit Wasser hergestellt werden.

Die Aufwandmengen des Herbizids der Formel I in den Wirkstoffmischungen variieren im allgemeinen zwischen 0,5 und 4,0 kg/ha, während die Aufwandmengen der Verbindungen der Formeln II bzw. II′ im Bereich zwischen 0,001 und 2,0 kg/ha liegen können, speziell für Verbindungen der Formel II, II′ zwischen 0,05 u. 2,0 kg a.i./ha.

Die erfindungsgemäßen Mittel können in den üblichen, dem Fachmann geläufigen Zubereitungen, z.B. als benetzbare Pulver, Stäubemittel, Granulate, Dispersionskonzentrate, emulgierbare Konzentrate oder versprühbare Lösungen, in den Handel gebracht werden. Die formulierten Mittel enthalten dabei die Wirkstoffe im allgemeinen in Konzentrationen von 2 bis 95 Gew.-%.

Benetzbare Pulver sind in Wasser gleichmäßig dispergierbare Präparate, die neben den Wirkstoffen außer einem Verdünnungs- oder Inertstoff noch Netzmittel, z.B. polyoxethylierte Alkylphenole, polyoxethylierte Oleyl- oder Stearylamine, Alkyl- oder Alkylphenyl-sulfonate und Dispergiermittel, z.B. lignin-sulfonsaures Natrium, dinaphthylmethandisulfonsaures Natrium oder auch oleylmethyltaurinsaures Natrium enthalten.

Emulgierbare Konzentrate werden durch Auflösen des Wirkstoffgemisches in einem organischen Lösungsmittel, z.B. Butanol, Cyclohexanon, Dimethylformamid, Xylol oder auch höhersiedenden Aromaten und Zusatz eines nichtionischen Netzmittels, beispielweise eines polyoxäthylierten Alkylphenols oder eines polyoxäthylierten Oleyl- oder Stearylamins, erhalten.

In benetzbaren Pulvern variiert die Gesamt-Wirkstoffkonzentration zwischen etwa 10 % und 95 %, der Rest besteht aus den oben angegebenen Formulierungszusätzen. Bei emulgierbaren Konzentraten beträgt die Wirkstoffkonzentration etwa 10 % bis 80 %. Staubförmige Formulierungen enthalten meistens 5 % bis 20 % an Wirkstoffen, versprühbare Lösungen etwa 2 % bis 20 %. Bei Granulaten hängt der Wirkstoffgehalt zum Teil davon ab, in welcher Form (flüssig oder fest) die Wirkstoffe vorliegen und welche Granulierhilfsmittel, Füllstoffe usw. verwendet werden.

Zur Anwendung werden die handelsüblichen Konzentrate gegebenenfalls in üblicher Weise verdünnt, z.B. bei benetzbaren Pulvern und emulgierbaren Konzentraten mittels Wasser.

Staubförmige und granulierte Zubereitungen sowie versprühbare Lösungen werden vor der Anwendung nicht mehr mit weiteren inerten Stoffen verdünnt.

**A. Formulierungsbeispiele**

a) Ein Stäubemittel wird erhalten, indem man 10 Gewichtsteile Wirkstoffgemisch und 90 Gewichtsteile Talkum als Inertstoff mischt und in einer Schlagmühle zerkleinert.

b) Ein in Wasser leicht dispergierbares, benetzbares Pulver wird erhalten, indem man 25 Gewichtsteile Wirkstoffgemisch, 64 Gewichtsteile kaolinhaltigen Quarz als Inertstoff, 10 Gewichtsteile ligninsulfonsaures Kalium und 1 Gewichtsteile oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gewichtsteile Wirkstoffgemisch mit 6 Gewichtsteilen Alkylphenolpolyglykol ether (®Triton X 207), 3 Gewichtsteilen Isotridecanolpolyglykolether (8 AeO) und 71 Gewichtsteilen paraffinischem Mineralöl (Siedebereich z.B. ca. 255 bis über 377° C) mischt und in einer Reibkugelmühle auf eine Feinheit von unter 5 Mikron vermahlt.

d) Ein emulgierbares Konzentrat wird erhalten aus 15 Gewichtsteilen Wirkstoffgemisch, 75 Gewichtsteilen Cyclohexanon als Lösungsmittel und 10 Gewichtsteilen oxethyliertem Nonylphenol (10 AeO) als Emulgator.

**B. Biologische Beispiele:**

Der Nachweis des Synergismus in den nachfolgenden Beispielen ergibt sich aus dem Vergleich des aus den Wirkungen der Einzelkomponenten errechneten additiven Wirkungsgrads mit dem experimentell gefundenen Wirkungsgrad der Wirkstoffkombinationen. Die Errechnung des additiven Wirkungsgrades erfolgt nach der Formel von S.R. Colby (vgl. Calculating synergistic and antagonistic responses of herbicide combinations, Weeds, 15, 1967, S. 20 bis 22).

Diese Formel lautet:

$$E = X + Y - \frac{X \cdot Y}{100}$$

wobei

X = % Schädigung durch Herbizid A bei x kg/ha Aufwandmenge,

X = % Schädigung durch Herbizid B bei y kg/ha Aufwandmenge,

E = % die erwartete Schädigung der Herbizide A + B bei x + y kg/ha Aufwandmenge bedeuten.

Ist die tatsächliche Schädigung größer als berechnet, so ist die Wirkung der Wirkstoffkombination mehr als additiv, d.h., es liegt ein synergistischer Effekt vor.

**Beispiel 1**

Samen verschiedener Ungräser und Unkräuter wurden in sandiger Lehmerde in Plastiktöpfen (Ø 9 cm) ausgesät und unter guten Wachstumsbedingungen im Gewächshaus 3 - 4 Wochen angezogen. Anschließend wurden die als wäßrige Lösungen formulierten Verbindungen alleine sowie in Kombination in Form von versprühbaren Lösungen auf die oberirdischen Pflanzenteile gesprüht. Die verwendete Wassermenge

entsprach dabei 400 l/ha.

Nach ca. 4-5 Wochen Standzeit im Gewächshaus unter optimalen Wachstumsbedingungen wurde die herbizide Wirkung visuell bonitiert. Die Ergebnisse sind in der nachfolgenden Tabelle zusammengefaßt.

Die theoretisch nach Colby zu erwartenden Wirkungen der Mischungen sind in Klammern jeweils hinter den beobachteten Wirkungen angegeben.

**Tabelle 1**

Herbizide Wirkung der Einzelwirkstoffe und der erfindungsgemäßen Mischungen

| Produkt (Bsp.-Nr.) | Dosis (kg a.i./ha) | herbidzide Wirkung in % ALM | LOM | ECG |
|---|---|---|---|---|
| Ia | 2,0 | 80 | 98 | 99 |
| | 1,0 | 70 | 93 | 98 |
| | 0,5 | 30 | 70 | 80 |
| | 0,25 | 0 | 10 | 10 |
| | 0,125 | 0 | 0 | 0 |
| IIb | 0,038 | 20 | 10 | 0 |
| | 0,019 | 0 | 0 | 0 |
| | 0,009 | 0 | 0 | 0 |
| IIc | 0,038 | 60 | 50 | 0 |
| | 0,019 | 40 | 15 | 0 |
| | 0,009 | 20 | 0 | 0 |
| IIe | 0,15 | 55 | 60 | 25 |
| | 0,075 | 50 | 50 | 15 |
| | 0,038 | 30 | 10 | 0 |
| I a + IIb | 2,0 + 0,038 | 93(84) | | |
| | 1,0 + 0,038 | 83(76) | | |
| | 0,5 + 0,038 | 55(44) | | |
| | 0,25 + 0,038 | 40(20) | | |
| | 0,125 + 0,038 | 30(20) | | |
| I a + IIb | 2,0 + 0,019 | 90(80) | | |
| | 1,0 + 0,019 | 80(70) | | |
| | 0,5 + 0,019 | 50(30) | | |
| | 0,25 + 0,019 | 40( 0) | | |
| | 0,125 + 0,019 | 10( 0) | | |
| I a + IIb | 2,0 + 0,009 | 93(80) | | |
| | 1,0 + 0,009 | 75(70) | | |
| | 0,5 + 0,009 | 40(30) | | |
| | 0,25 + 0,009 | 10( 0) | | |

**Forsetzung der Tabelle 1**

| Produkt (Bsp.-Nr.) | Dosis (kg a.i./ha) | herbidzide Wirkung in % ALM | LOM | ECG |
|---|---|---|---|---|
| I a + IIc | 1,0 + 0,038 | | | 100(98) |
| | 0,5 + 0,038 | | | 93(80) |
| | 0,25 + 0,038 | | | 20(10) |
| | 0,125 + 0,038 | | | 10( 0) |
| I a + IIc | 1,0 + 0,019 | 90(83) | | 100(98) |
| | 0,5 + 0,019 | 70(62) | | 85(80) |
| | 0,25 + 0,019 | 50(45) | | 15(10) |
| I a + IIc | 2,0 + 0,009 | 97(84) | | |
| | 1,0 + 0,009 | 80(76) | | |
| | 0,5 + 0 009 | 60(44) | | |
| | 0,25 + 0,009 | 40(20) | | |
| I a + IIe | 1,0 + 0,15 | 95(87) | | |
| | 0,5 + 0,15 | 93(69) | | 95(85) |
| | 0,25 + 0,15 | 75(55) | | 60(33) |
| | 0,125 + 0,15 | 70(55) | | 35(25) |
| I a + IIe | 1,0 + 0,075 | 90(85) | | |
| | 0,5 + 0,075 | 85(65) | | 88(83) |
| | 0,25 + 0,075 | 65(50) | | 30(24) |
| | 0,125 + 0,075 | 60(50) | | 20(15) |
| I a + IIe | 2,0 + 0,038 | 95(86) | | |
| | 1,0 + 0,038 | 95(79) | | |
| | 0,5 + 0,038 | 55(51) | 88(73) | |
| | 0,25 + 0,038 | 50(30) | 50(19) | |
| | 0,125 + 0,038 | | 20(10) | |

Abkürzungen zur Tabelle 1:

ALM = Alopecurus myosuroides
LOM = Lolium multiflorum
ECG = Echinochloa crus-galli
a.i. = Aktivsubstanz

Die Ergebnisse zeigen, daß mit der Wirkstoffkombination eine unerwartet hohe herbizide Wirksamkeit erreicht wurde, die wesentlich besser ist, als auf Grund der Einzelwirkungen der Wirkstoffe nach Colby erwartet werden konnte.

**Beispiel 2**

Rhizome bzw. Wurzelstücke verschiedener Unkräuter wurden in sandiger Lehmerde in Töpfen von 13 cm Durchmesser ausgesät und im Gewächshaus bis zur Bestockung angezogen. Die als wäßrige Lösungen bzw. als Emulsionskonzentrate fromulierten erfindungsgemäßen Kombinationen wurden in 400 l/ha auf die oberirdischen Grünteile der Versuchspflanzen gesprüht. Die Erfolgsbonitur wurde nach 4-5 Wochen durchgeführt.

Die Ergebnisse zeigten eine starke synergistische Wirkung der Kombinationen gegenüber perennierenden Unkräutern wie Cynodon dactylon (CND) und Agropyron repens (AGR) im Vergleich zu den Wirkungsgraden der Einzelwirkstoffe.

**Ansprüche**

1. Herbizide Mittel, dadurch gekennzeichnet, daß sie einen Wirkstoff der Formel I oder dessen Salz

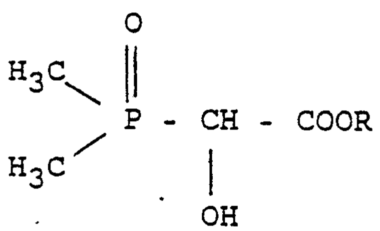

(I),

worin
R Wasserstoff oder Alkyl, das gegebenenfalls ein- oder mehrfach durch Halogen, Hydroxy, ($C_1$-$C_4$)-Alkoxy oder ($C_1$-$C_4$)-Alkoxy-carbonyl substituiert ist, bedeutet, in Kombination mit einer Verbindung der Formel II oder II′ oder deren Salz

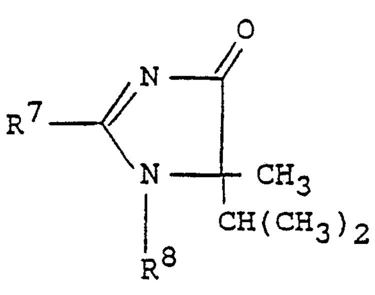

(II)

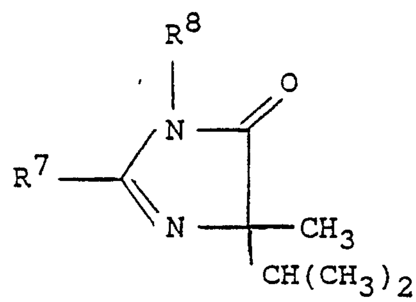

(II′),

worin jeweils
$R^7$ Phenyl, Pyridyl, Chinolinyl, die alle gegebenenfalls ein- oder mehrfach durch ($C_1$-$C_4$) Alkyl oder ($C_1$-$C_4$) Alkoxy, die beide ein- oder mehrfach durch Halogen substituiert sein können, einen Rest der Formeln $-COOR^9$, $-COO-CH_2-R^9-COOR^9$, $-CH_2R^9-COO(C_1-C_4\text{-alkyl})$, oder $CH_2R^9-COOCH_2R^9-COOR^9$, worin jeweils unabhängig voneinander $R^9$ Wasserstoff oder ($C_1$-$C_4$) Alkyl bedeutet, oder einen Rest der Formel $-CH_2-S-(O)_n-(C_1-C_4\text{-alkyl})$ mit n = 0, 1 oder 2 substituiert sind, und

$R^8$ H, einen Rest der Formeln -CONH($C_1$-$C_4$-alkyl), -OCO($C_1$-$C_4$-alkyl), -CO($C_1$-$C_4$-alkyl) bedeuten, wobei die Verbindungen mit $R^7$ = 3-Carboxy-2-pyridyl und $R^8$ = H ausgeschlossen sind, enthalten.

2. Herbizide Mittel gemäß Anspruch 1, dadurch gekennzeichnet, daß sie einen Wirkstoff der Formel I sowie deren Salze,
worin R Wasserstoff oder ($C_1$-$C_4$)Alkyl bedeutet,
in Kombination mit einer Verbindung der Formel II oder II', worin
$R^7$ Pyridyl, das durch ($C_1$-$C_4$) Alkyl, eine Rest der Formel -COOR$^9$, -COOCH$_2$R$^9$-COOR$^9$, -CH$_2$R$^9$-COO($C_1$-$C_4$-alkyl), -CH$_2$(R$^9$)-COOCH$_2$R$^9$-COOR$^9$ oder -CH$_2$S(O)$_n$-($C_1$-$C_4$-alkyl) sustituiert sein kann, bedeutet und
$R^8$ die in Anspruch 1 genannte Bedeutung besitzt, enthalten.

3. Herbizide Mittel gemäß einem oder mehreren der Ansprüche 1 und 2, dadurch gekennzeichnet, daß sie als Wirkstoff das Na-Salz der Formel I in Kombination mit einer Verbindung der Formel II oder II', worin
a) $R^7$ = 3-Methoxycarbonyl-2-pyridyl,
$R^8$ = Ethylaminocarbonyl,
b) $R^7$ = 3-Methoxycarbonyl-2-pyridyl,
$R^8$ = Methoxycarbonyl oder
c) $R^7$ = 2-Methoxycarbonyl-5-methyl-phenyl,
$R^8$ = H bedeuten, enthalten.

4. Herbizide Mittel, gemäß einem oder mehreren der Ansprüche 1 bis 3, dadurch gekennzeichnet, daß das Mischungsverhältnis der Verbindungen der Formel I zu den Verbindungen der Formel II bzw II' im Bereich zwischen 1000 : 1 bis 1 : 10 variiert.

5. Verfahren zur Bekämpfung von Schadpflanzen, dadurch gekennzeichnet, daß man auf diese oder die Anbaufläche ein herbizides Mittel gemäß einem oder mehreren der Ansprüche 1 bis 4 in einer wirksamen Menge appliziert.

6. Verwendung von herbiziden Mitteln gemäß einem oder mehreren der Ansprüche 1 bis 5 zur Bekämpfung von Schadpflanzen.

Europäisches Patentamt

# EUROPÄISCHER RECHERCHENBERICHT

Nummer der Anmeldung

EP 89 11 4861

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,P | EP-A-0 162 326 (HOECHST)<br>* Patentansprüche *<br>----- | 1-6 | |
| | | | RECHERCHIERTE SACHGEBIETE (Int. Cl.4) |
| | | | A 01 N |

Der vorliegende Recherchenbericht wurde für alle Patentansprüche erstellt

| Recherchenort | Abschlußdatum der Recherche | Prüfer |
|---|---|---|
| DEN HAAG | 26-09-1989 | DECORTE D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument